# EUROPEAN PATENT APPLICATION

(11) **EP 2 107 414 A1**
(43) Date of publication of application: **07.10.2009**
(21) Application number: 09250950.4
(22) Date of filing: 30.03.2009
(51) Int. Cl.: G02B 27/01

(54) **Head mount display and head mount display system**

(30) Priority: 31.03.2008 JP 2008094166
(71) Applicant: Brother Kogyo Kabushiki Kaisha, Nagoya-shi, Aichi-ken 467-8561 (JP)
(72) Inventor: Nakazawa, Rika, Nagoya-shi Aichi 467-8561 (JP)
(74) Representative: Smith, Samuel Leonard

(57) **Abstract**

A see-through-type head mount display which is configured to project an image light corresponding to content information to an eye of a viewer P while allowing an external light to pass therethrough includes: an imaging unit 2 which is configured to photograph at least a portion of a range of a viewing field of the viewer P; an operation information selecting unit 110 which is configured to, when a predetermined mark image M falls within an imaging region of the imaging unit 2, a portion of the mark image M is covered by the viewer P, and a configuration that a portion of the mark image M is cut off is photographed by the imaging unit 2, select operation information corresponding to the configuration of the photographed mark image M; and an operation processing unit 110 which is configured to execute processing corresponding to the operation information selected by the operation information selecting unit 110.

## Description

### TECHNICAL FIELD

The present invention relates to a head mount display and a head mount display system and, more particularly to a see-through-type head mount display which allows transmission of an external light therethrough and projects an image light corresponding to content information to an eye of a viewer and a head mount display system provided with the display.

### BACKGROUND ART

Conventionally, there has been known an information processing device which includes a memory unit for storing various content information such as moving image files, still image files and sentence files, and a reproducing unit which reproduces the content information stored in the memory unit.

A typical example of such an information processing device is a personal computer. In general, the personal computer is constituted of a computer body provided with the memory unit, the reproducing unit and the like, a mechanical operating unit such as a key board or a mouse which a user operates to allow the computer body to perform predetermined operations, a display which displays the content information reproduced by the reproducing unit as an image and the like.

As the display which displays the content information, a display device which is used in a state where the display device is placed on a table such as a CRT (Cathode Ray Tube) display or a liquid crystal display has been known in general. However, recently, there has been also developed a head mount display (HMD). Such a head mount display includes an optical scanning part which converts content information into image signals, and performs scanning by guiding an image light which is generated based on the image signals (hereinafter referred to as "image light") to an eye of the user. When the user operates the scanning part in a state where the head mount display is mounted on his/her head, scanning of the image light is performed on a retina of the user in two dimensional directions so that the user can observe an image.

Further, recently, there has also been developed a content information reproducing device which includes the memory unit, the reproducing unit and the like in the inside of the HMD.

In performing the control of the selection of an image to be displayed on various displays, change, fast feeding, rewinding and the like of an image being displayed (hereinafter referred to as "display control"), usually, it is necessary to operate a mechanical operating unit. Accordingly, the content information reproducing device has a drawback that the operation of such a mechanical operation unit is cumbersome.

For example, in the case where a display is connected to a computer body, the user has to operate the mechanical operating unit such as a mouse or a keyboard for performing the display control of the display, and such an operation is cumbersome.

Particularly, in the case of the head mount display which incorporates the memory unit, the reproducing unit and the like, the user has to operate the mechanical operating unit mounted at a position which cannot be observed with the eyes when the head mount display is mounted on the head for performing the display control of the head mount display and hence, the operation of the operating unit is cumbersome.

To overcome such a drawback, JP-A-09-185456 (patent document 1) discloses a device including a recognition unit which recognizes a shape of a hand of a user, a display unit which displays a feature of the shape of the hand read by the recognition unit on a screen as a particular shape, and a control unit which controls information displayed on the screen based on the particular shape displayed on the screen by the display unit.

According to this device, the user can perform the display control of the display by merely changing the shape of the hand by moving his/her finger tips or the like without operating the operating unit and hence, the user is freed from the awkwardness of having to operate the mechanical operating unit (see patent document 1, for example).

### DISCLOSURE OF THE INVENTION

However, in the above-mentioned conventional device, there exists a possibility that the recognition unit erroneously reads the shape of the hand of the user and therefore the display control of the display cannot be performed normally.

That is, the shape of the hand of the user varies largely depending on the age or sex of the user and hence, it is difficult for the recognition unit to accurately determine the distinctive shape of the hand of the user whereby when the recognition unit erroneously reads the shape of the hand, there exists the possibility that the device cannot perform the normal display control.

Further, among users, there may be a user who can make simple movements of his/her hand or the like but cannot skillfully manipulate his/her hand into the desired shape by freely moving his/her finger tips or the like. Accordingly, to allow the recognition unit to roughly read the shape of his/her hand including the desired shape and to allow the control unit to accurately perform the display control based on a result of the recognition, the device is required to preliminarily store a huge quantity of information on shapes of hands, and at the same time, the device is required to execute huge amount of information processing to collate the huge amount of information and a shape of an actual hand which the recognition unit reads thus giving rise to a drawback that a processing load of the control unit is increased.

According to one aspect of the present invention, there is provided a see-through-type head mount display which is configured to project an image light corresponding to content information to an eye of a viewer while allowing an external light to pass therethrough, the head mount display including: an imaging unit which is configured to photograph at least a portion of a range of a viewing field of the viewer; an operation information selecting unit which is configured to, when a predetermined mark image which is displayed on a mark display body falls within an imaging region of the imaging unit, a portion of the mark image is covered by the viewer, and a configuration that a portion of the mark image is cut off is photographed by the imaging unit, select operation information corresponding to a configuration of the photographed mark image; and an operation processing unit which is configured to execute processing corresponding to the operation information selected by the operation information selecting unit.

The above-described head mount display may further include a content information selecting unit which is configured to, when the image photographed by the imaging unit contains the whole mark image, select content information corresponding to the mark image from plural kinds of content information, and the operation information selecting unit may be configured to, when the content information is selected by the content information selecting unit and, thereafter, the configuration that a portion of the mark image is cut off is photographed by the imaging unit, select operation information corresponding to the selected content information based on the configuration of the photographed partially cutoff mark image.

In the above-described head mount display, the content information selecting unit may be configured to finish the selection of the content information when a predetermined time elapses from a point of time that the mark image is not contained in an image photographed by the imaging unit after the selection of the content information corresponding to the mark image.

The above-described head mount display may further include a first memory unit which stores a first correspondence table in which the operation information is associated with a cutoff state of the mark image photographed by the imaging unit, and the operation information selecting unit may perform the selection of the operation information based on the first correspondence table stored in the first memory unit.

In the above-described head mount display, the first memory unit may store the first correspondence table in which the operation information is associated with the configuration of the photographed mark image for every mark image corresponding to a kind of the content information.

The above-described head mount display may further include a second memory unit which stores a second correspondence table in which a kind of the content information is associated with configuration information of the whole mark image, and the content information selecting unit may be configured to perform the selection of the content information based on the second correspondence table stored in the second memory unit.

In the above-described head mount display, the second memory unit may store a table in which information of configuration where at least one of reflectance, color and pattern in at least a region of the mark image differs is associated with a corresponding kind of the content.

In the above-described head mount display, the mark image may have a cruciform.

In the above-described head mount display, the mark image may be configured to emphasize contrast at an outer peripheral portion thereof.

In the above-described head mount display, the mark image may be colored fluorescent color.

In the above-described head mount display, the mark image may be provided with a pattern for discriminating a kind of the mark image in a region thereof.

In the above-described head mount display, the pattern may be a two-dimensional bar code.

In the above-described head mount display, the pattern may be arranged at a center position of the mark image.

The head mount display may be configured to project an image light which performs a guide display of a region to be photographed by the imaging unit to the eye of the viewer.

The head mount display may be configured to project an image light of the partially cutoff configuration of the mark image to the eye of the viewer.

In the above-described head mount display, the operation information selecting unit may be configured to select the operation information corresponding to the configuration of the mark image when a state where the mark image is photographed by the imaging unit in a state where the portion of the mark image is cut off continues.

The head mount display may further include an illumination unit which illuminates a region photographed by the imaging unit.

According to another aspect of the present invention, there is provided a head mount display system which includes: the above-described head mount display; and a mark display body on which the predetermined mark image is displayed.

According to the present invention, it is possible to provide the head mount display and the head mount display system having the display which can make a mechanical operating unit operated by a user for performing a display control of the display unnecessary and, at the same time, can perform the display control of the display without executing huge amount of information processing.

### BRIEF DESCRIPTION OF THE DRAWINGS

Fig. 1(A) and Fig. 1(B) are explanatory views showing an HMD system according to an embodiment of the present invention;
Fig. 2(A) to Fig. 2(H) are explanatory views schematically showing an example of a viewing field of a user during a display control of the HMD using a mark image;
Fig. 3(A) to Fig. 3(H) are explanatory views showing an example of respective operations which the user performs using the mark image at the time of allowing the HMD to execute various kinds of display control functions, and an example of recognition mark images in such operations;
Fig. 4 is an explanatory view showing plural kinds of mark images and kinds of display controls by the HMD corresponding to the mark images;
Fig. 5 is an explanatory view showing the electrical and optical constitution of the HMD according to one embodiment of the present invention;
Fig. 6 is an explanatory view showing one example of a display control table;
Fig. 7 is a flowchart showing one example of information processing executed by a control part of the HMD at the time of performing the display control;
Fig. 8 is a flowchart showing one example of information processing executed by the control part of the HMD at the time of performing the display control; and
Fig. 9 is an explanatory view showing a modification of a mark image used in the operation of the HMD according to one embodiment of the present invention.

### BEST MODE FOR CARRYING OUT THE INVENTION

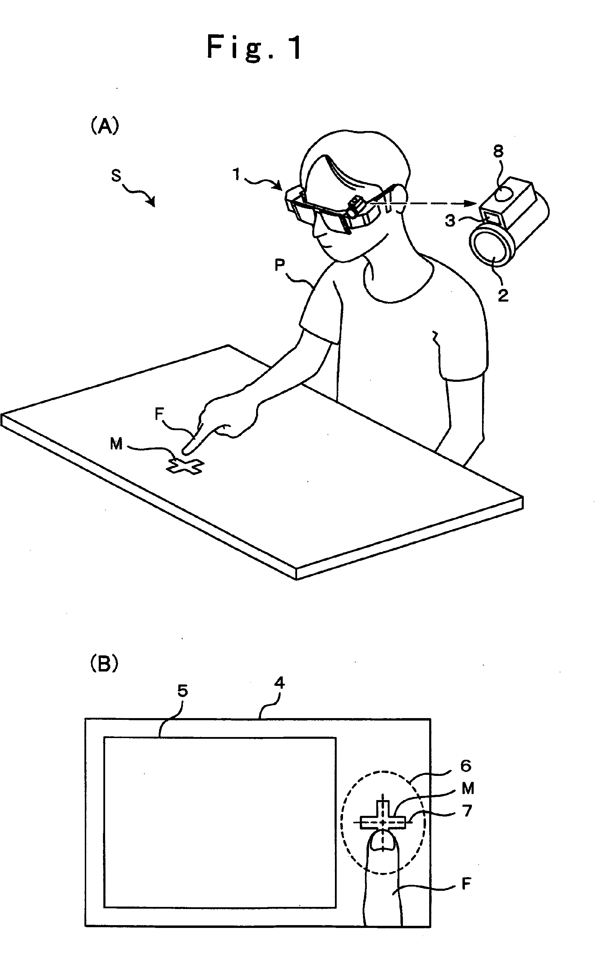

Hereinafter, an embodiment of the present invention is explained specifically in conjunction with drawings. Fig. 1 is an explanatory view showing a head mount display system according to this embodiment.

Here, Fig, 1(A) is a perspective view showing the general configuration of the head mount display system, and Fig. 1(B) is an explanatory view showing a viewing field of a user in a state shown in Fig. 1(A).

As shown in Fig. 1(A), a head mount display (hereinafter referred to as "HMD") system S according to this embodiment includes, in a state where the HMD is mounted on a head of a user P who is a viewer, an HMD 1 which displays various content information such as a moving image file, a still image file and a sentence file as an image in a state where the user P can observe the content information, and a predetermined mark image M which is displayed on a mark display body (a desk in this embodiment) which is used for operating the HMD 1. Here, symbol F in Fig. 1(A) indicates a finger of the user P.

In this embodiment, although the explanation of the HMD system S is made with respect to a case in which the mark display body on which the mark image is displayed is the desk, the mark display body is not limited to the desk. That is, provided that the display body can display the mark image (allows the user P to observe the mark image), the mark display body may be a seal on which the mark image can be printed or a display device such as a liquid crystal display capable of displaying the mark image.

The HMD 1 is configured as follows. That is, the HMD 1 includes an optical scanning part which converts internally or externally stored various content information into image signals, and performs scanning of an image light generated based on the image signals (hereinafter referred to as "image light") by guiding the image light to an eye of the user P. By operating the scanning part in a state where the HMD 1 is mounted on the head of the user P, scanning of the image light is performed on a retina of the user P in two-dimensional directions thus allowing the user P to observe an image corresponding to the content information (hereinafter simply referred to as "content") . The specific constitution of the HMD 1 is explained in detail later.

Further, the HMD 1 is configured such that the user P can observe surroundings in a region outside a region where the content is displayed within a viewing field of the user P even while in the middle of displaying the content.

That is, the HMD 1 is a see-through-type head mount display which projects an image light corresponding to content information to an eye of the user while allowing the transmission of external light therethrough.

Further, the HMD 1 is configured to execute various controls for performing selection of a kind of content to be displayed, fast feeding, rewinding, expansion, contraction and the like of the content to be displayed (hereinafter referred to as "display control").

Particularly, the HMD system S is provided with a predetermined mark image M at an arbitrary position (a position on a desk in this embodiment) which enters a viewing field of the user P in a state where the HMD 1 is mounted on the user P in place of a mechanical operating unit which the user P operates for making the HMD 1 execute various display controls. In this embodiment, as shown in Fig. 1(A) and Fig. 1(B), the mark image M having a cruciform in a plan view which has a frame thereof colored black and the inside of the frame colored white.

In this embodiment, the HMD 1 is of the see-through type as described above and hence, in a use mode shown in Fig. 1(A), by changing a position of his head such that the mark image M reaches a predetermined position within the viewing field of the user P, the user P can acquire a broad viewing field shown in Fig. 1(B).

In Fig. 1(B), symbol 4 indicates a region which schematically shows the viewing field of the user P, symbol 5 indicates a region where the content is displayed (hereinafter referred to as "content display region"), symbol 6 indicates a mark image recognition region described later, and symbol 7 indicates a guide display for positioning the mark image M (hereinafter referred to as "target").

Further, in this HMD system S, depending on a kind of the mark image M to be aligned with the target, a kind of content to be displayed on the HMD 1 can be selected. At the same time, the user P can cover a portion of the mark image M which is aligned with the target with his finger F or the like so as to change a mode (a shape in this embodiment) of a viewable portion of the mark image M and hence, user can make the HMD 1 execute various display controls corresponding to the shapes.

That is, the HMD 1 of this embodiment includes a CCD (Charge Coupled Device) sensor 2 which constitutes an imaging unit for photographing of at least a portion of a region of a viewing field of the user P, a content information selecting unit which selects a content corresponding to a kind of the mark image M out of plural kinds of contents when the predetermined mark image M displayed on the mark display body falls within an imaging region of the CCD sensor 2, an operation information selecting unit which selects operation information corresponding to a mode of the photographed mark image M when the predetermined mark image M displayed on the mark display body falls within the imaging region of the CCD sensor 2, a portion of the mark image M is covered with the user P, and a mode in which a portion of the mark image M is cut off is photographed by the CCD sensor 2, and an operation processing unit which executes processing corresponding to the operation information selected by the operation information selecting unit. Symbol 8 in Fig. 1(A) indicates a brightness sensor which detects brightness of surroundings, and symbol 3 indicates an LED (Light Emitting Diode) which constitutes an illuminating unit which illuminates the imaging region of the CCD sensor 2 when the brightness sensor 8 detects that the brightness of the surroundings becomes lower than predetermined brightness.

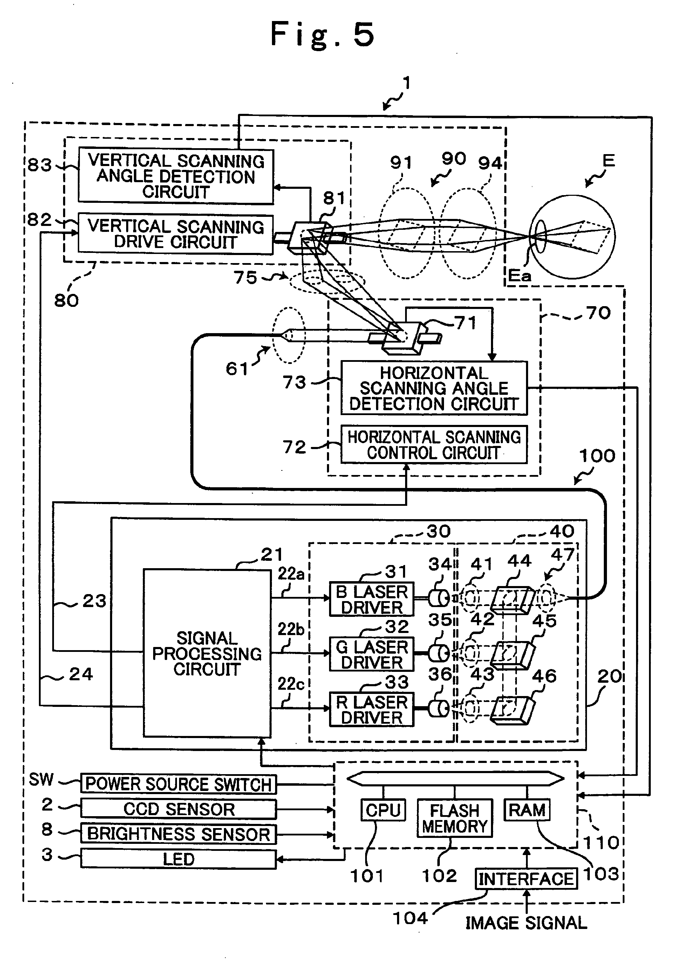

In this embodiment, in a control part 110 of the HMD 1 (see Fig. 5), when a CPU 101 described later executes a predetermined information processing program and functions as the above-mentioned content information selecting unit, operation information selecting unit, operation processing unit and the like.

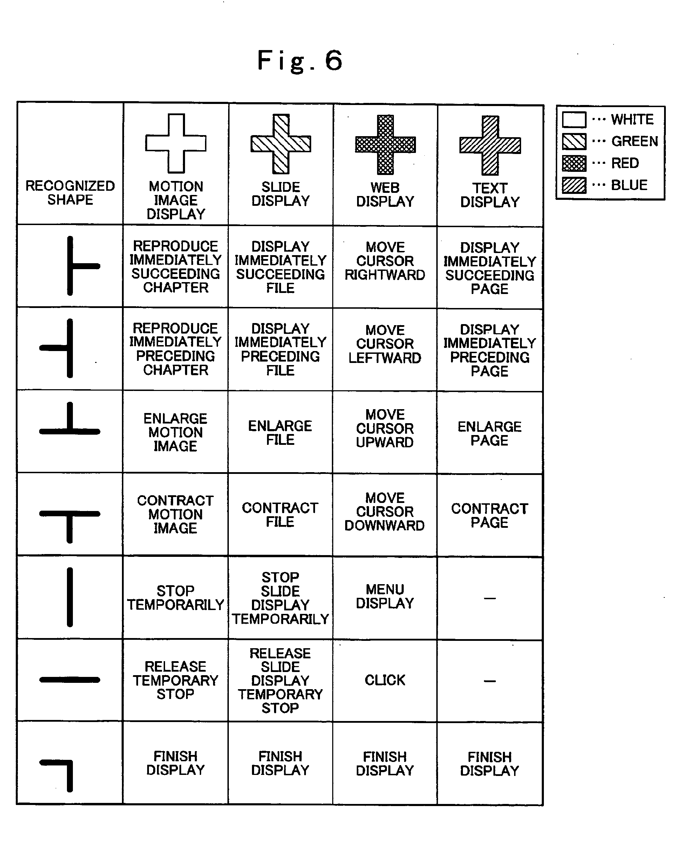

Further, the HMD 1 includes a first memory unit which stores a first correspondence table (see Fig. 6) in which modes (here, shapes) of plural kinds of mark images M photographed by the CCD sensor 2 and operation information corresponding to plural kinds of display controls which the HMD 1 possesses are correlated with each other. The specific content of the first correspondence table is explained in detail later.

Then, the above-mentioned operation information selecting unit is configured to reference the first correspondence table stored in the first memory unit at the time of performing the selection of the operation information and to select the operation information corresponding to the shape of the mark image M photographed by the CCD sensor 2.

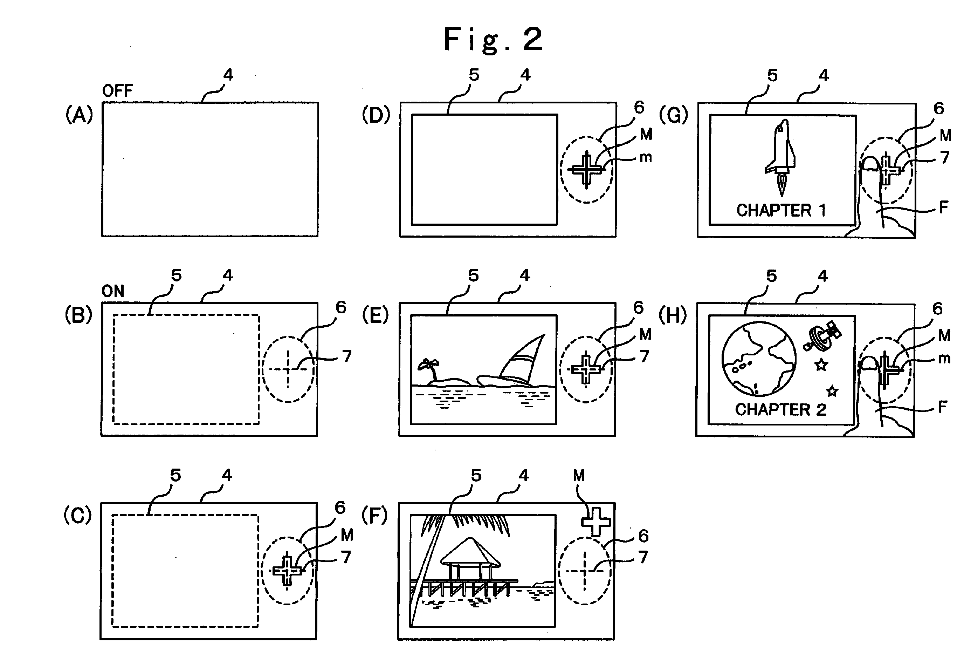

Here, in the HMD system S of this embodiment, an example of a case in which the user P makes the HMD 1 execute the display control using the mark image M is explained in conjunction with Fig. 2.

Fig. 2 (A) to Fig. 2(H) are explanatory views which schematically show a viewing field of the user P during the display control performed by the HMD 1 using the mark image M. To be more specific, Fig. 2(A) to Fig. 2(F) show a series of steps of the display control in which the user P supplies electricity to the HMD 1 and makes the HMD 1 display the content of one moving image using the mark image M, while Fig. 2 (G) and Fig. 2 (H) show a series of steps of the display control in which the user P advances the content of one moving image being displayed using the mark image M.

As shown in Fig. 2(A), when the HMD 1 is in an OFF state, no image is displayed, and the viewing field 4 of the user P assumes a state which allows the user P to observe a state of surroundings through the HMD 1.

Next, as shown in Fig. 2(B), when electricity is supplied to the HMD 1 by the user P to turn on the HMD 1, the control part 110 of the HMD 1 displays, within the viewing field 4 of the user P, an outer frame portion of the content display region 5 in which the content is expected to be displayed, an outer frame portion of the mark recognition region 6 which guides and displays the region photographed by the CCD sensor 2, and the target 7 which functions as the guide display for allowing the CCD sensor 2 to accurately recognize the mark image M by a broken line.

Here, the control part 110 of the HMD 1 allows the user P to observe the content display region 5, the mark recognition region 6 and the target 7 by projecting an image light for displaying the content display region 5, the mark recognition region 6 and the target 7 to the eyes of the user P.

Next, as shown in Fig. 2(C), the user P moves his head to make the mark image M fall within the mark recognition region 6 in the viewing field 4 using the target 7 as a mark.

Thereafter, when a state shown in Fig. 2 (C) continues for a predetermined time (for example, 2 seconds), the control part 110 of the HMD 1, as shown in Fig. 2(D), displays a cruciform recognition mark m at a position where the recognition mark m overlaps with the target 7 and the mark image M thus informing the user P of the recognition of the whole mark image M by the HMD 1.

Although described in detail later, at this stage of the operation, the HMD 1 performs the display control such that the content information selection unit selects a content corresponding to the mark image M from a mode of the recognized whole mark image M and, as shown in Fig. 2(E), reproduces the selected content by displaying the content within the content display region 5, and completes the display of the recognition mark m.

That is, the control part 110 functions as a content information selecting unit when the whole mark image M (the mark image M from which a portion of a shape is not cut off) is continuously photographed by the CCD sensor 2 for a predetermined time, and functions as an operation information selecting unit after a content corresponding to the mark image M is selected so as to select operation information for starting the reproduction of the content. Thereafter, the control part 110 functions as an operation processing unit so as to execute the processing of the reproducing the content.

In this manner, when the reproduction of the content starts in the content display region 5, the control part 110 of the HMD 1 continues the reproduction of the content thereafter. During this period, when the user P moves his head and, as shown in Fig. 2(F), a state where the mark image M is positioned outside the mark recognition region 6 is continued for a predetermined time (for example, 10 seconds), the control part 110 finishes the reproduction of the content.

However, when the user P returns his head to the original position so as to return the mark image M to the inside of the mark recognition region 6 before a predetermined time (for example, 10 seconds) elapses after the mark image M is positioned outside the mark recognition region 6, the control part 110 performs a display control such that the reproduction of the content is continued.

In this manner, the control part 110 of the HMD 1 selects the content information corresponding to the mark image M, and when an image of the mark image M becomes outside the mark recognition region 6 after starting the display of the content corresponding to the content information and the predetermined time elapses, the control part 110 finishes the selection of the content information.

Further, when the user P covers a left-side projecting portion of the mark image M with his finger when Chapter 1 in the content of a moving image which is divided into a plurality of Chapters is reproduced as shown in Fig. 2(G), the control part 110 of the HMD 1 executes a display control for reproducing (fast-feeding) next Chapter (Chapter 2) in the content as shown in Fig. 2(H).

Here, when the user P covers and conceals a portion of the mark image M so that a state where a portion (left-side projecting portion in this embodiment) of the shape of the mark image M is photographed by the CCD sensor 2 in a partially cutoff state continues for a predetermined time (for example, 2 seconds) as shown in Fig. 2(G), the control part 110 selects the processing information for reproducing the next Chapter as the operation information corresponding to the configuration of the mark image M.

Further, when the control part 110 selects the operation information for reproducing the next Chapter, before the next Chapter is reproduced, as shown in Fig. 2(H) , the control part 110 executes the display control such that an image light having the configuration of the mark image M corresponding to the selected operation information is projected on an eye of the user P so as to allow the user P to observe a schematic recognition mark m in an unconcealed portion of the mark image M.

In this manner, according to the HMD system S of this embodiment, when the user P mounts the HMD 1 and appreciates the content, the user P can select the content to be displayed on the HMD1 by merely allowing the HMD system S to display the mark image M at an arbitrary position which falls within a viewing field of the user P and by moving his head so that the whole mark image M falls in the inside of the mark recognition region 6 and, thereafter, can start the reproduction of the content. Further, by merely covering and concealing the lefts-side projecting portion of the mark image M during the reproduction of the content, the next Chapter in the content can be reproduced. Accordingly, it is unnecessary to provide a mechanical operation unit which the user P operates for performing the display control of the HMD 1.

Further, as the mark image M, the image which imitates a relatively simple figure referred to as a cruciform is used, and the HMD 1 is configured to recognize the figure of a portion of the mark image M which is not covered and concealed by the user P and to select processing information corresponding to the figure. Accordingly, it is unnecessary for the HMD 1 to discriminate and recognize the shape of the complicated figure and hence, the possibility of erroneously recognizing the figure at the time of selecting the operation information can be reduced as much as possible.

Further, the HMD 1 of this embodiment includes the first correspondence table in which the shape of the portion of the mark image M photographed by the CCD sensor 2 which is not covered and concealed by the user P and the plural kinds of operation information are made to correspond to each other. Accordingly, by merely performing comparison collation between the shape of the mark image M actually photographed by the CCD sensor 2 and the figure in the first correspondence table, the HMD 1 can perform the display control without executing huge amount of information processing.

Further, only the case in which the content of the moving image is reproduced by the HMD 1 using the mark image M and the case in which the content in reproduction is advanced are explained in conjunction with Fig. 2. However, the HMD 1 of this embodiment is configured to execute plural kinds of display controls such as the expansion and contraction of the image of the content to be reproduced when the user P merely changes the portion of the mark image M to be covered and concealed.

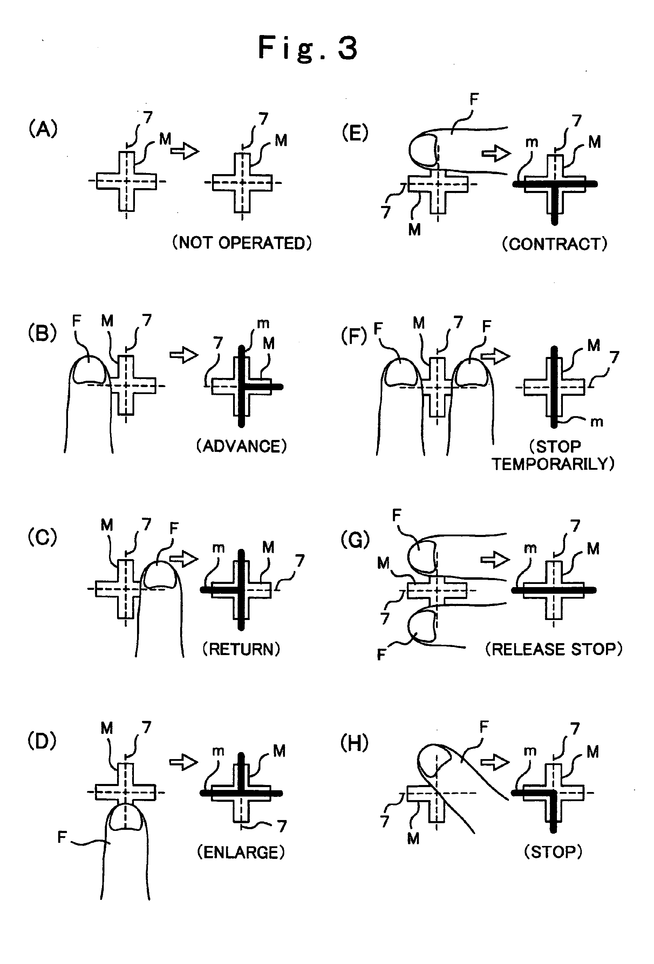

Here, a method of using the mark image M for executing plural kinds of display control functions which the HMD 1 of this embodiment possesses and the like are explained in conjunction with Fig. 3(A) to Fig. 3(H).

Fig. 3(A) to Fig. 3(H) are explanatory views showing respective operations which the user P performs using the mark image M at the time of making the HMD 1 execute various kinds of display control functions, and recognition marks m which are displayed in these operations.

As shown in Fig. 3(A) , when the user P does not cover and conceal the mark image M at all during the reproduction of the content, that is, when the user P does not take any action in a state where the whole mark image M is positioned in the inside of the mark recognition region 6, the control part 110 of the HMD 1 executes the display control of continuing the reproduction of the content.

Further, as shown in Fig. 3(B), when the user P covers and conceals the left-side projecting portion of the mark image M with his finger F, the control part 110 of the HMD 1, as described above, executes the display control of reproducing the immediately succeeding Chapter in the content during reproduction, that is, the display control of advancing the content.

Here, the control part 110, before reproducing the immediately succeeding Chapter, as the recognition mark m, displays the figure of the portion of the mark image M which is not concealed by the user P, that is, a figure which is obtained by rotating a letter "T" in the counterclockwise direction by 90 degrees as viewed from the user P.

Further, as shown in Fig. 3(C), when the user P covers and conceals the right-side projecting portion of the mark image M with his finger F, the control part 110 of the HMD 1 executes the display control of reproducing the immediately preceding Chapter in the content during reproduction, that is, the display control of returning the content.

Here, the control part 110, before reproducing immediately preceding Chapter, as the recognition mark m, displays the figure of the portion of the mark image M which is not concealed by the user P, that is, the figure which is obtained by rotating the letter "T" in the clockwise direction by 90 degrees as viewed from the user P.

Further, as shown in Fig. 3(D), when the user P covers and conceals the lower-side projecting portion of the mark image M with his finger F, the control part 110 of the HMD 1 executes the display control of performing an enlarging display of the content during reproduction.

Here, the control part 110, before performing the enlarging display of the content, as the recognition mark m, displays the figure of the portion of the mark image M which is not concealed by the user P, that is, the figure which is obtained by making the letter "T" upside-down in the clockwise direction as viewed from the user P.

Further, as shown in Fig. 3(E), when the user P covers and conceals the upper-side projecting portion of the mark image M with his finger F, the control part 110 of the HMD 1 executes the display control of performing a contracting display of the content during reproduction.

Here, the control part 110, before performing the contracting display of the content, as the recognition mark m, displays the figure of the portion of the mark image M which is not concealed by the user P, that is, the letter "T" figure as viewed from the user P.

Further, as shown in Fig. 3(F), when the user P covers and conceals the left-side projecting portion and the right-side projecting portion of the mark image M with his finger F, the control part 110 of the HMD 1 executes the display control of temporarily stopping the content during reproduction.

Here, the control part 110, before temporarily stopping the content, as the recognition mark m, displays the figure of the portion of the mark image M which is not concealed by the user P, that is, a letter "I" figure as viewed from the user P.

Further, as shown in Fig. 3(G), when the user P covers and conceals the upper-side projecting portion and the lower-side projecting portion of the mark image M with his finger F, the control part 110 of the HMD 1 executes the display control of releasing the temporary stop of the content.

Here, the control part 110, before releasing the temporary stop of the content, as the recognition mark m, displays the figure of the portion of the mark image M which is not concealed by the user P, that is, a figure which is obtained by rotating the letter "I" in the clockwise direction by 90 degrees as viewed from the user P.

Further, as shown in Fig. 3(H), when the user P covers and conceals the upper-side projecting portion and the right-side projecting portion of the mark image M with his finger F, the control part 110 of the HMD 1 executes the display control of stopping the reproduction of the content, that is, the display control of forcibly finishing the reproduction of the content.

Here, the control part 110, before finishing the reproduction of the content, as the recognition mark m, displays the figure of the portion of the mark image M which is not concealed by the user P, that is, a figure which is obtained by rotating a letter "L" in the clockwise direction by 180 degrees as viewed from the user P.

In this manner, according to the HMD 1 of this embodiment, when the user P merely changes the position of the mark image M to be covered and concealed, the control part 110 executes the display control corresponding to a cutoff configuration of the mark. Accordingly, without operating the mechanical operating unit such as a switch, the user P allows the HMD 1 to execute various functions provided to the HMD 1 thus enhancing the operability of the HMD 1 for the user P.

Further, the HMD 1 of this embodiment is configured to be capable of displaying, besides the above-mentioned content of the moving image, various contents including a content of a still image, a content of a Web site on the Internet, a content of a text document and the like.

In the explanation made hereinafter, to display a content of a moving image is referred to as a moving image display, to display a content of a still image sequentially is referred to as a slide display, to display a content of a Web site is referred to as a Web display, and to display a content of a text document is referred to as a text display. In performing the Web display by the HMD 1, the HMD 1 is connected to an external device which is connected to the Internet not shown in the drawing, and the Web display is performed based on image signals inputted from the external device.

Particularly, in the HMD system S of this embodiment, although shapes used in these displays are the same cruciform as the above-mentioned mark image M, plural kinds of mark images which differ in configuration from each other are provided for respective kinds of contents displayed by the HMD 1.

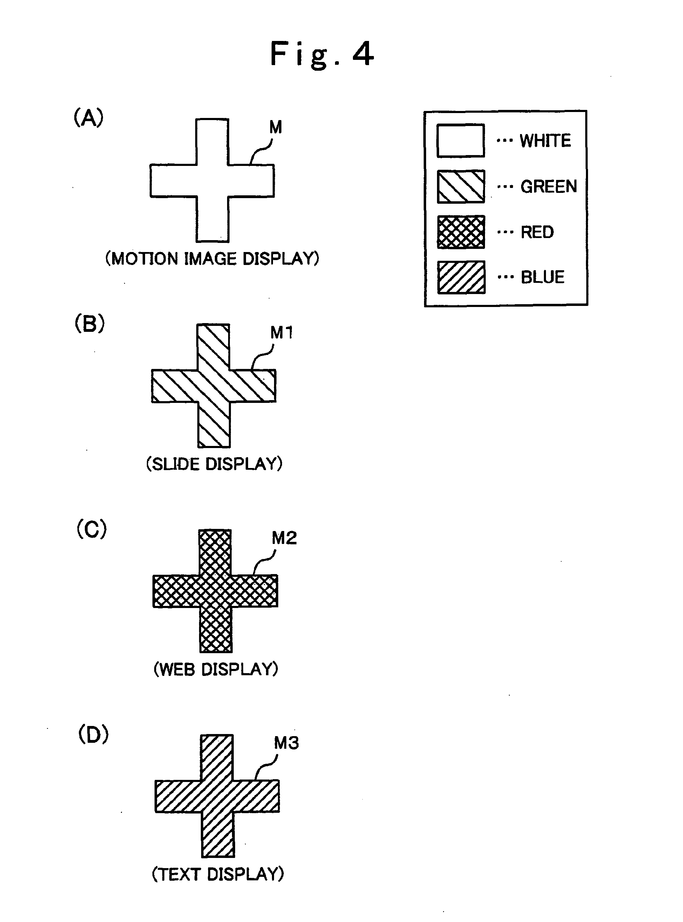

Fig. 4(A) to Fig. 4(D) are explanatory views showing plural kinds of mark images M, M1, M2, M3, and kinds of display controls by the HMD 1 corresponding to the mark images M, M1, M2, M3.

In this embodiment, as shown in Fig. 4(A), the display control of the HMD 1 corresponding to the mark image M having the inside of a cruciform outer frame colored white is referred to as the moving image display. As shown in Fig. 4(B), the display control of the HMD 1 corresponding to the mark image M1 having the inside of a cruciform outer frame colored green is referred to as the slide display. As shown in Fig. 4(C), the display control of the HMD 1 corresponding to the mark image M2 having the inside of a cruciform outer frame colored red is referred to as the Web display. As shown in Fig. 4(D), the display control of the HMD 1 corresponding to the mark image M3 having the inside of a cruciform outer frame colored blue is referred to as the text display.

Further, the HMD 1 of this embodiment includes a second memory unit which stores a second table (see Fig. 4) which is associated with configuration (color in this embodiment) information of the above-mentioned plural kinds of mark images M, M1, M2, M3 respectively corresponding to kinds of contents to be displayed.

Further, the control part 110 of the HMD 1, when the whole image of any one of mark images M, M1, M2, M3 is contained in an image photographed by the CCD sensor 2, functions as the content information selecting unit for selecting the content corresponding to the mark image M, M1, M2, M3.

In this embodiment, in the control part 110 of the HMD 1 (see Fig. 5), the CPU 101 described later functions as the content information selecting unit by executing a predetermined information processing program.

Then, in the HMD 1, the above-mentioned operation information selection is performed such that the operation information relating to the display control corresponding to the kind of the content selected by the content information selection unit is selected based on the configuration (color in this embodiment) of the mark image M, M1, M2, M3 photographed by the CCD sensor 2.

Here, the control part 110 which functions as the content information selection unit performs the selection of the content based on the second correspondence table stored in the second memory unit.

In this manner, according to the HMD system S of this embodiment, when the user P appreciates the content by mounting the HMD 1, by only adhering the plural kinds of mark images M, M1, M2, M3 at arbitrary positions which fall within a viewing field of the user P, and by aligning a target 7 with any one of the plural kinds of mark images M, M1, M2, M3, the content of the kind corresponding to the mark which is aligned with the target 7 can be displayed on the HMD 1 and hence, it is unnecessary to provide a mechanical operation unit which the user P operates for selecting the kind of the content to be displayed on the HMD 1.

Further, the HMD 1 of this embodiment includes the second correspondence table in which the configuration (color in this embodiment) of the mark image M photographed by the CCD sensor 2 and the kind of the content to be displayed are made to correspond to each other. Accordingly, by merely performing comparison collation between the color of the whole mark image M photographed by the CCD sensor 2 and the color corresponding to the kind of the content in the second correspondence table, the HMD 1 can display the content of the kind which the user P desires without executing huge amount of information processing.

Further, the HMD 1 of this embodiment is configured such that when the display of the content corresponding to the mark image M, M1, M2, M3 photographed by the CCD sensor 2 is started and, thereafter, a portion of the mark image M, M1, M2, M3 is covered and concealed by the user P, the control part 110 references the first correspondence table corresponding to the content during reproduction, selects the operation information corresponding to a shape of the mark image M, M1, M2, M3 photographed by the CCD sensor 2, and executes the display control corresponding to the selected operation information.

Here, the electrical constitution and the like of the HMD 1 according to this embodiment are explained in conjunction with Fig. 5. That is, Fig. 5 is an explanatory view showing the electrical and optical constitution of the HMD 1 according to this embodiment.

As shown in Fig. 5, the HMD 1 includes the control part 110 which performs a systematic control of the operation of the whole HMD 1, and an image light generating part 20 which reads out an image signal supplied from the control part 110 for every dot clock, and generates and radiates an image light whose intensity is modulated corresponding to the read image signal. Further, the HMD 1 includes, between the image light generating part 20 and an eye E of the user P, a collimation optical system 61 which collimates the laser beams (image light) which are generated by the image light generating part 20 and are radiated via an optical fiber 100, a horizontal scanning part 70 which functions as a first optical scanning part for scanning the image light collimated by the collimation optical system 61 in a horizontal direction (first direction) in a reciprocating manner for an image display, a vertical scanning part 80 which functions as a second optical scanning part for scanning the image light scanned in the horizontal direction using the horizontal scanning part 70 in a vertical direction (second direction substantially orthogonal to the first direction) in a reciprocating manner, a relay optical system 75 which is arranged between the horizontal scanning part 70 and the vertical scanning part 80, and a relay optical system 90 which radiates the image light scanned in the horizontal direction as well as in the vertical direction (scanned two-dimensionally) onto the pupil Ea.

In this embodiment, the horizontal scanning part 70, the relay optical system 75, the vertical scanning part 80 and the relay optical system 90 function as the optical scanning part which displays an image by scanning the image light generated based on the image signals two-dimensionally.

Further, the image light generating part 20 includes a signal processing circuit 21. An image signal supplied from the external device such as a personal computer (not shown in the drawing) is inputted to the signal processing circuit 21 via an interface 104 and a control part 110. Based on the image signal, the signal processing circuit 21 generates respective signals and the like which constitute components for synthesizing an image. The image signals 22a to 22c of blue (B), green (G) and red (R) are generated and outputted by the signal processing circuit 21. Further, the signal processing circuit 21 outputs a horizontal drive signal 23 used in the horizontal scanning part 70 and a vertical drive signal 24 used in the vertical scanning part 80 respectively.

Further, the image light generating part 20 includes a light source part 30 which functions as an image light output part for forming three image signals (B, R, G) 22a to 22c outputted from the signal processing circuit 21 for respective dot clocks into image lights respectively, and an optical synthesizing part 40 which generates an arbitrary image light by combining these three image lights into one image light.

The light source part 30 includes a B laser 34 which generates a blue image light, a B laser driver 31 which drives the B laser 34, a G laser 35 which generates a green image light, a G laser driver 32 which drives the G laser 35, an R laser 36 which generates a red image light, and an R laser driver 33 which drives the R laser 36. Here, each laser 34, 35, 36 may be constituted of a semiconductor laser or a solid-state laser provided with a harmonic generating mechanism, for example. Here, when the semiconductor laser is used as the laser 34, 35, 36, the intensity of the image light may be modulated by directly modulating a drive current, while when the solid laser is used as the laser 34, 35, 36, it is necessary to modulate the intensity of the image light by providing an external modulator to each laser 34, 35, 36.

The optical synthesizing part 40 includes collimation optical systems 41, 42, 43 provided for collimating the image lights incident from the light source part 30 into parallel image lights, dichroic mirrors 44, 45, 46 provided for synthesizing the collimated image lights, and a coupling optical system 47 which guides the synthesized image light to the optical fiber 100.

The laser beams radiated from the respective lasers 34, 35, 36 are, after being collimated by the collimation optical systems 41, 42, 43 respectively, incident on the dichroic mirrors 44, 45, 46. Thereafter, the respective image lights are selectively reflected on or are allowed to pass through these dichroic mirrors 44, 45, 46 corresponding to wavelengths thereof.

To be more specific, the blue image light radiated from the B laser 34 is, after being collimated by the collimation optical system 41, incident on the dichroic mirror 44. The green image light radiated from the G laser 35 is incident on the dichroic mirror 45 via the collimation optical system 42. The red image light radiated from the R laser 36 is incident on the dichroic mirror 46 via the collimation optical system 43.

The image lights of three primary colors which are respectively incident on these three dichroic mirrors 44, 45, 46 are reflected on the dichroic mirrors 44, 45, 46 or are allowed to pass through the dichroic mirrors 44, 45, 46 selectively corresponding to wavelengths thereof, and arrive at the coupling optical system 47 and are converged by the coupling optical system. Then, the converged image lights are outputted to the optical fiber 100.

The horizontal scanning part 70 and the vertical scanning part 80, to bring the image lights incident from the optical fiber 100 into a state which allows the image lights to be projected as an image, scan the image lights in a horizontal direction as well as in a vertical direction to form scanning image lights.

The horizontal scanning part 70 includes a resonance-type polarizing element 71 which includes a reflective surface for scanning the image light in the horizontal direction, a horizontal scanning control circuit 72 which constitutes the drive signal generator for generating a drive signal which oscillates the reflective surface of the resonance-type polarizing element 71 by allowing the resonance-type polarizing element 71 to generate resonance, and a horizontal scanning angle detecting circuit 73 which detects an oscillation state such as an oscillation range and an oscillation frequency of the reflective surface of the resonance-type polarizing element 71 based on a displacement signal outputted from the resonance-type polarizing element 71.

In this embodiment, the horizontal scanning angle detecting circuit 73 is configured to input a signal indicative of the detected oscillation state of the resonance-type polarizing element 71 to the control part 110.

The vertical scanning part 80 includes a polarizing element 81 for scanning the image light in the vertical direction, a vertical scanning control circuit 82 for driving the polarizing element 81, and a vertical scanning angle detecting circuit 83 for detecting an oscillation state such as an oscillation range and an oscillation frequency of the reflective surface by the vertical scanning control circuit 82.

Further, the horizontal scanning control circuit 72 and the vertical scanning control circuit 82 are respectively driven based on a horizontal drive signal 23 and a vertical drive signal 24 outputted from the signal processing circuit 21, and the vertical scanning angle detecting circuit 83 inputs a signal indicative of the detected oscillation state of the polarizing element 81 to the control part 110.

Then, the control part 110 described in detail later adjusts the horizontal drive signal 23 and the vertical drive signal 24 by controlling the operation of the signal processing circuit 21 thus allowing the horizontal scanning part 70 and the vertical scanning part 80 to change the scanning angles of the image light whereby the brightness of the image to be displayed can be adjusted.

The scanning angles changed in this manner are detected by the control part 110 based on detection signals from the horizontal scanning angle detecting circuit 73 and the vertical scanning angle detecting circuit 83, and are fed back to the horizontal drive signal 23 via the signal processing circuit 21 and the horizontal scanning control circuit 72 and, at the same time, are fed back to the vertical drive signal 24 via the signal processing circuit 21 and the vertical scanning control circuit 82.

Further, the HMD 1 includes a relay optical system 75 for relaying the image light between the horizontal scanning part 70 and the vertical scanning part 80. The light scanned in the horizontal direction by the resonance-type polarizing element 71 is converged on the reflective surface of the polarizing element 81 by the relay optical system 75, is scanned in the vertical direction by the polarizing element 81, and is radiated to a relay optical system 90 as a scanning image light scanned two-dimensionally.

The relay optical system 90 includes lens systems 91, 94 having a positive refractive power. The scanned image lights for display radiated from the vertical scanning part 80, using the lens system 91, have center lines thereof respectively arranged approximately parallel to each other and are respectively converted into converged image lights. Then, using the lens system 94, the converged image lights are arranged approximately parallel to each other and, at the same time, are converted such that the center lines of these image lights are converged on a pupil Ea of the user P. Although not shown in the drawing, a half mirror is arranged in front of an eye of the user P. The image light from the relay optical system 90 is reflected on the half mirror and is incident on the pupil Ea of the user P, while an external light passes through the half mirror and is incident on the pupil Ea of the user P. In this manner, by allowing the viewing of an image formed of the image light in a state that the image overlaps with ambient scenery, it is possible to provide the see-through-type image display device.

Here, according to this embodiment, the image light incident from the optical fiber 100 is scanned in the horizontal direction by the horizontal scanning part 70 and, thereafter, is scanned in the vertical direction by the vertical scanning part 80. However, the arrangement of the horizontal scanning part 70 and the arrangement of the vertical scanning part 80 may be exchanged, and the image light may be scanned in the vertical direction by the vertical scanning part 80 and, thereafter, may be scanned in the horizontal direction by the horizontal scanning part 70.

Further, the control part 110 includes a CPU (Central Processing Unit) 101, a flash memory 102 which constitutes a non-volatile memory, and a RAM (Random Access Memory) 103.

The CPU 101, the flash memory 102 and the RAM 103 are respectively connected to a bus for data transmission, and the transmission and reception of various information are performed via the bus for data transmission.

Further, the control part 110 is also connected with a power source switch SW of the HMD 1, the CCD sensor 2 which photographs the mark images M, M1, M2, M3, a brightness sensor 8 which detects brightness of surroundings, an LED 3 which illuminates the mark recognition region 6 which is an imaging range of the CCD sensor 2 when the brightness sensor 8 detects that the brightness of surroundings becomes lower than the predetermined brightness, and an interface 104 which can be connected with an external device such as a personal computer.

The CPU 101 is an arithmetic processing device which executes various functions provided to the HMD 1 by operating various circuits not shown in the drawing which constitutes the HMD 1 by executing various information processing programs stored in the flash memory 102.

The flash memory 102 stores various information processing programs executed by the CPU 101 for allowing the control part 110 to perform a systematic control of the operation of the whole HMD 1. That is, the flash memory 102 stores information processing programs for operating the image light generating part 20, the horizontal scanning part 70, the vertical scanning part 80 and the like at the time of performing the display control such as reproduction, stop, fast-feeding and rewinding of the content to be displayed by the HMD 1.

Further, the flash memory 102 stores plural kinds of tables which the control part 110 references in performing various display controls including the second correspondence table which the control part 110 uses for determining the configuration of the mark image M, M1, M2, M3 photographed by the CCD sensor 2, the first correspondence table which the control part 110 uses for determining the shape of the mark image M, M1, M2, M3 whose portion is covered and concealed by the user P from the photographed image by the CCD sensor 2 and the like.

That is, in this embodiment, the flash memory 102 functions as the first memory unit which stores the first correspondence table and the second memory unit which stores the second correspondence table.

Further, in this embodiment, the first correspondence table and the second correspondence table are not separately stored in the flash memory 102. That is, one display control table which is formed by combining the first correspondence table and the second correspondence table is stored in the flash memory 102.

Here, the display control table stored in the flash memory 102 is explained in conjunction with Fig. 6. Fig. 6 is an explanatory view showing the display control table.

As shown in Fig. 6, in the display control table provided to the HMD 1 of this embodiment, information in which kinds of contents to be displayed and the configurations of the mark images M, M1, M2, M3 corresponding to kinds of respective contents are made to correspond to each other is described (stored) on an uppermost row.

In this embodiment, a moving image display is associated with the mark image M having the inside of a cruciform frame colored white, a slide display is associated with the mark image M1 having the inside of a cruciform frame colored green, a Web display is associated with the mark image M2 having the inside of a cruciform frame colored red, and a text display is associated with the mark image M3 having the inside of a cruciform frame colored blue. That is, the uppermost row of the display control table corresponds to the previously-described second correspondence table.

Further, in this display control table, shapes (recognition shapes) of the mark images M, M1, M2, M3 photographed by the CCD sensor 2 are described (stored) on a leftmost column. Here, the respective described shapes correspond to plural kinds of respective recognition marks m.

In the explanation made hereinafter, a pattern described in an uppermost part of the recognition shape column is referred to as "rightward projecting mark", a mark described below "rightward projecting mark" is referred to as "leftward projecting mark", a mark described below "leftward projecting mark" is referred to as "upward projecting mark", a mark described below "upward projecting mark" is referred to as "downward projecting mark", a mark described below "downward projecting mark" is referred to as "longitudinal mark", a mark described below "longitudinal mark" is referred to as "lateral mark", and a mark described below "lateral mark" is referred to as "L-shaped mark".

In the display control table, at a position which corresponds to each recognition mark m and the kind of each content to be displayed respectively, the operation information which corresponds to each display control to be executed by the control part 110 during the display of the content is described.

That is, in this embodiment, portions of the display control table shown in Fig. 6 except for portions which correspond to the second correspondence table in the display control table shown in Fig. 6 corresponds to the previously-described first correspondence table.

In the first correspondence table of this embodiment, the shapes of the mark images M, M1, M2, M3 photographed by the CCD sensor 2 and the operation information of the display control to be executed by the control part 110 when the mark images M, M1, M2, M3 having such shapes are photographed are made to correspond to each other for respective kinds of contents displayed by the HMD 1 as follows.

### (1) Moving image display

"Reproduction of immediately succeeding Chapter" is made to correspond to "rightward projecting mark", "reproduction of immediately preceding Chapter" is made to correspond to "leftward projecting mark", "enlargement of moving image" is made to correspond to "upward projecting mark", "contraction of moving image" is made to correspond to "downward projecting mark", "temporary stop of moving image" is made to correspond to "longitudinal mark", "release of temporary stop" is made to correspond to "lateral mark", and "display finish" is made to correspond to "L-shaped mark".

### (2) Slide display

"Display of immediately succeeding file" is made to correspond to "rightward projecting mark", "display of immediately preceding file" is made to correspond to "leftward projecting mark", "enlargement of file" is made to correspond to "upward projecting mark", "contraction of file" is made to correspond to "downward projecting mark", "temporary stop of slide display" is made to correspond to "longitudinal mark", "release of temporary stop of slide display" is made to correspond to "lateral mark", and "display finish" is made to correspond to "L-shaped mark".

### (3) Web display

"Rightward movement of cursor" is made to correspond to "rightward projecting mark", "leftward movement of cursor" is made to correspond to "leftward projecting mark", "upward movement of cursor" is made to correspond to "upward projecting mark", "downward movement of cursor" is made to correspond to "downward projecting mark", "menu display" is made to correspond to "longitudinal mark", "click (decision)" is made to correspond to "lateral mark", and "display finish" is made to correspond to "L-shaped mark".

### (4) Text display

"Display of immediately succeeding page" is made to correspond to "rightward projecting mark", "display of immediately preceding page" is made to correspond to "leftward projecting mark", "enlargement of page" is made to correspond to "upward projecting mark", "contraction of page" is made to correspond to "downward projecting mark", and "display finish" is made to correspond to "L-shaped mark".

In this manner, in the HMD 1 of this embodiment, the display control table formed by combining the fist correspondence table and the second correspondence table is stored in the flash memory 102.

Accordingly, in the HMD 1, when the user P covers and conceals a portion of the mark image M, M1, M2, M3 corresponding to the content being displayed during the display of the content, the control part 110 can, by merely referencing the configuration of the mark image M, M1, M2, M3 photographed by the CCD sensor 2, and one table consisting of the display control table, discriminate the kind of content being displayed and the shape of the mark image M, M1, M2, M3 whose portion is cut off and hence, it is unnecessary for the control part 110 to get access to a plurality of regions in the flash memory 102 at the time of referencing the table whereby a processing load imposed on the control part 110 can be reduced.

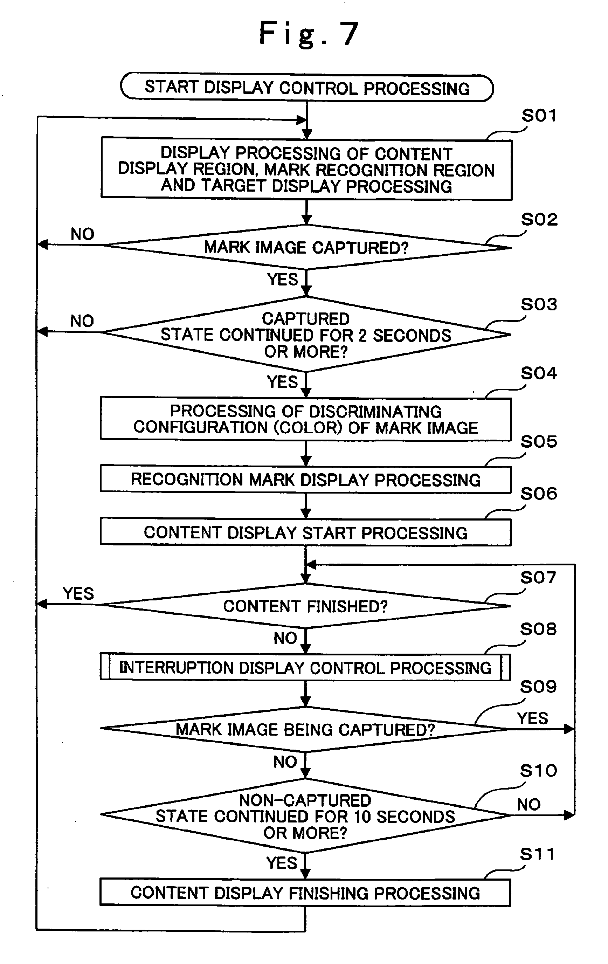

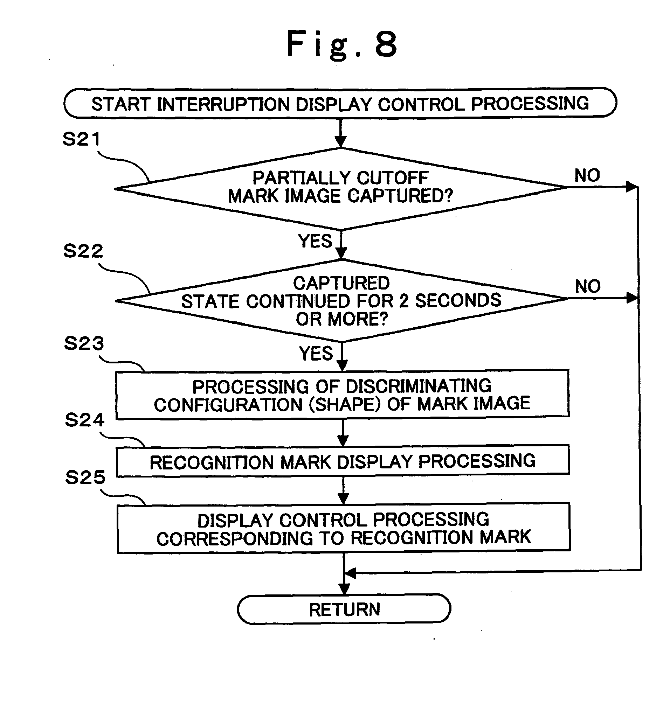

Next, the display control processing executed by the control part 110 of the HMD 1 according to this embodiment is explained in conjunction with Fig. 7. Fig. 7 and Fig. 8 are flowcharts showing the display control processing executed when the control part 110 of the HMD 1 performs the display control.

In the explanation made hereinafter, the display control processing executed at the time of displaying the content by the control part 110 of the HMD 1 (hereinafter, simply referred to as "control part 110") is explained, and the explanation of other processing is omitted.

In the HMD 1 of this embodiment, the control part 110 functions as the above-mentioned content information selecting unit, operation information selecting unit, operation processing selecting unit and the like by executing the information processing programs stored in the flash memory 102.

The control part 110, when electricity is supplied to the HMD 1, starts the display control processing shown in Fig. 7, and repeatedly executes the display control processing until the supply of the electricity to the HMD 1 is stopped.

When the display control processing starts, as shown in Fig. 7, first of all, the control part 110 executes processing of displaying the outer frame of the content display region 5, the outer frame of the mark recognition region 6 and the target 7 by broken lines within the viewing field 4 of the user P (step S01) and, thereafter, the processing advances to step S02.

Next, in step S02, the control part 110 determines whether or not one of the mark images M, M1, M2, M3 is photographed in the mark recognition region 6 by the CCD sensor 2. Hereinafter, a state where the mark image M, M1, M2, M3 is photographed in the mark recognition region 6 by the CCD sensor 2 is referred to as "mark image is captured".

When the control part 110 determines that the mark image is captured in step S02 (step S02: Yes) , the processing advances to step S03, while when the control part 110 determines that the mark image is not captured (step S02: NO), the processing returns to step S01.

In step S03, the control part 110 determines whether or not a state in which the mark image is captured in the mark recognition region 6 by the CCD sensor 2 (hereinafter referred to as "captured state") continues for 2 seconds or more. When the control part 110 determines that the captured state continues for 2 seconds or more (step S03: Yes), the processing advances to step S04, while when the control part 110 determines that the captured state does not continue for 2 seconds or more (step S03: No), the processing returns to step S01.

In step S04, the control part 110 executes processing of determining the configuration (color in this embodiment) of the mark image captured by the CCD sensor 2.

Here, the control part 110 references the second correspondence table stored in the predetermined region in the flash memory 102, discriminates the color of the mark image, and selects the content information of the kind corresponding to a result of the discrimination and, thereafter, the processing advances to step S05.

Next, in step S05, the control part 110 executes processing of displaying the recognition mark m having the same shape as the mark image captured by the CCD sensor 2 such that the recognition mark m overlaps with the target 7 and, thereafter, the processing advances to step S06.

Next, in step S06, the control part 110 executes content display start processing of reproducing the content corresponding to the content information selected in step S04 and, thereafter, the processing advances to step S07.

Next, in step S07, the control part 110 determines whether or not the reproduction of the content being displayed is finished. When the control part 110 determines that the reproduction of the content being displayed is finished (step S07: Yes), the processing returns to step S01, while when the control part 110 determines that the reproduction of the content being displayed is not finished (step S07: No), the processing advances to step S08.

In step S08, the control part 110 executes interruption display control processing and, thereafter, the processing advances to step S09.

This interruption display control processing is processing which is started when the user P covers and conceals a portion of the mark image M, M1, M2, M3 with his finger F or the like for allowing the HMD 1 to execute the predetermined display control possessed by the HMD 1. The interruption display control processing is specifically explained later in conjunction with Fig. 8.

In step S09, the control part 110 determines whether or not the mark image is being captured in the mark recognition region 6 by the CCD sensor 2. When the control part 110 determines that the mark image is not being captured in the mark recognition region 6 (step S09:No), the processing advances to step S10, while when control part 110 determines that the mark image is being captured in the mark recognition region 6 (step S09:Yes), the processing returns to step S07.

In step S10, the control part 110 determines whether or not a state in which the mark image is not captured by the CCD sensor 2 (hereinafter referred to as "non-captured state") continues for 10 seconds or more. When the control part 110 determines that the non-captured state continues for 10 seconds or more (step S10: Yes), the processing advances to step S11, while when the control part 110 determines that the non-captured state does not continue for 10 seconds or more (step S10: NO), the processing returns to step S07.

In step S11, the control part 110 executes processing of finishing the display of content and, thereafter, the processing returns to step S01.

Next, in step S108 during the display control processing shown in Fig. 7, the interruption display control processing executed by the control part 110 is explained in conjunction with Fig. 8.

As shown in Fig. 8, when the interruption display control processing starts, the control part 110, first of all, determines whether or not the mark image having a shape in which a portion of a cruciform shape is cut off due to covering and concealing of a portion of the mark image by the user P (hereinafter referred to as "partially cutoff mark image") is captured by the CCD sensor 2 (step S21).

In this step S21, when the control part 110 determines that the partially cutoff mark image is captured (step S21: Yes), the processing advances to step S22, while when the control part 110 determines that the partially cutoff mark image is not captured (step S21: No), the interruption display control processing is finished.

In step S22, the control part 110 determines whether or not the captured state of the partially cutoff mark image continues for 2 seconds or more. When the control part 110 determines that the captured state of the partially cutoff mark image continues for 2 seconds or more (step S22: Yes), the processing advances to step S23, while when the control part 110 determines that the captured state of the partially cutoff mark image does not continue for 2 seconds or more (step S22: No), the interruption display control processing is finished.

In step S23, the control part 110 executes processing of discriminating a configuration (shape in this embodiment) of the partially cutoff mark image and, thereafter, the processing advances to step S24.

Here, the control part 110 discriminates the shape of the partially cutoff mark image by referencing the first correspondence table which is stored in a predetermined region in the flash memory 102, selects the operation information corresponding to the display control in response to a result of the discrimination and, thereafter, the processing advances to step S24.

Next, in step S24, the control part 110 executes the processing of displaying the recognition mark m having a shape similar to the partially cutoff mark image captured by the CCD sensor 2 such that the recognition mark m overlaps with the target 7 and, thereafter, the processing advances to step S25.

Next, in step S25, the control part 110 executes the display control corresponding to the recognition mark m (see Fig. 6) and, thereafter, the interruption display control processing is finished.

In this embodiment, due to the above-mentioned execution of the display control processing by the control part 110 of the HMD 1, the user P allows the HMD 1 to execute the various display controls. Accordingly, in a state where the HMD 1 is mounted on a head of the user P, the user P can easily perform a desired display control on the HMD 1 by merely covering and concealing a portion of the mark image which can be observed in a see-through manner on a side of the content display region 5 without operating a mechanical operation unit.

Further, in the HMD system of this embodiment, the plurality of mark images M, M1, M2, M3 having different colors are provided as the mark images M, M1, M2, M3 having different configurations for respective kinds of contents displayed on the HMD 1. However, the configurations of the mark images are not limited to the above, and mark images having arbitrary configurations can be arranged provided that the configurations of the mark images are configurations of the mark images which can discriminate the kinds of the contents to be displayed.

That is, as the configuration information of the mark images in the second correspondence table, the information of the configuration in which at least one of reflectance, color and pattern differs in at least some regions of the mark image may be associated with respective kinds of contents to be displayed.

Further, in the HMD system S of this embodiment, the control part 110 of the HMD 1 discriminates the difference in shape of the partially cutoff mark image and performs a display control corresponding to operation information selected in response to a result of discrimination. However, the method of selecting the operation information by the control part 110 is not limited to the above-described method. That is, provided that the operation information can be discriminated based on a result of the capture of the mark image by the CCD sensor 2, an arbitrary method may be adopted.

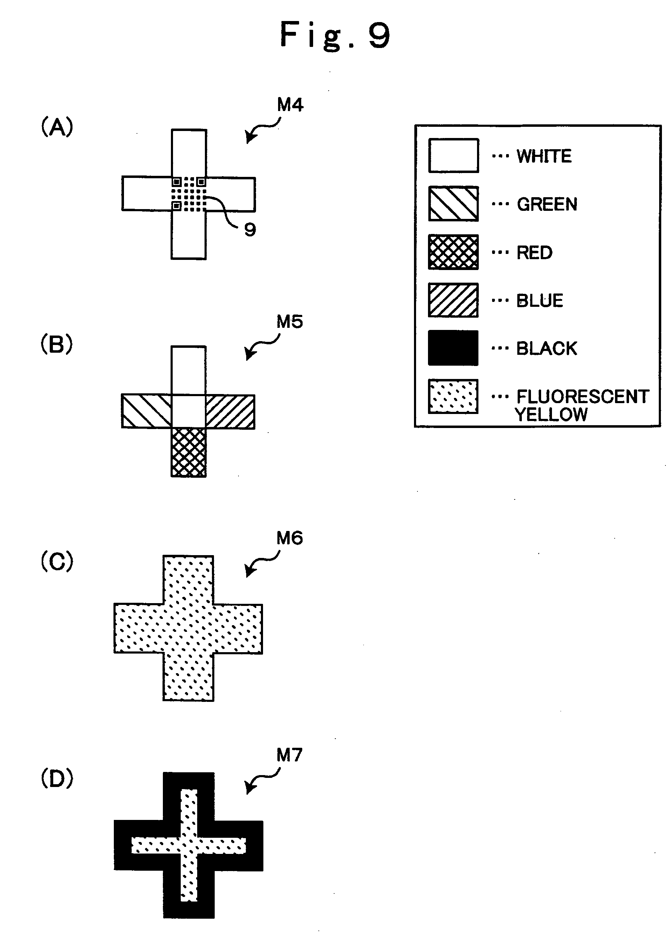

Hereinafter, a modification of the mark image used in the HMD system S of this embodiment is explained in conjunction with Fig. 9. Fig. 9 is an explanatory view showing the modification of the mark images M used in the operation of the HMD 1 according to this embodiment.

Fig. 9(A) shows a mark image M4 according to the first modification (hereinafter simply referred to as "mark image M4"). As shown in Fig. 9(A), the mark image M4 is constituted of a seal having the inside of a cruciform outer frame thereof colored white, and a pattern which discriminates each mark image is applied to a region of a portion of the mark image M4 (the center position of each mark image).

Particularly, in the mark image M4, as the pattern for discriminating each mark image M4, a two-dimensional bar code 9 in which predetermined information is described is arranged at a center position of the mark image M4.

In arranging the two-dimensional bar code at the center position of the mark image M4, the information on a kind of content is described in the two-dimensional bar code and, at the same time, an information processing program for analyzing the information described in the two-dimensional bar code is stored in the flash memory 102 of the HMD 1.

By constituting the mark image M4 and the HMD 1 in this manner, huge kinds of contents can be discriminated by the HMD 1.

Here, although a QR code is arranged as an example of the pattern for discriminating each mark image M4, the pattern is not limited to the QR code. For example, provided that the pattern can discriminate a kind of content, any arbitrary pattern such as a two-dimensional bar code other than the QR code, a one-dimensional bar code or a pattern which is the combination of simple figures can be used.

However, when the mark image M4 has such constitution, it is necessary to store an information processing program for analyzing each pattern in the flash memory 102 of the HMD 1.

Fig. 9(B) shows a mark image M5 according to the second modification (hereinafter simply referred to as "mark image M5"). As shown in Fig. 9(B), the mark image M5 is constituted of a seal in which, in the inside of a cruciform outer frame as viewed from the player P, a center portion and an upward projecting portion are colored white, a leftward projecting portion is colored green, a rightward projecting portion is colored blue, and a downward projecting portion is colored red.

In forming the mark image M5 in this manner, colors which are applied to the respective projecting portions of the respective mark images M5 are made different from each other for respective kinds of contents to be displayed.

By constituting the mark image M5 in this manner, the control part 110 of the HMD 1 can discriminate kinds of contents to be displayed by discriminating the colors of the respective projecting portions of the mark image M5.

Further, by forming the mark image M5 in this manner, the control part 110 of the HMD 1 can, when the partially cutoff mark image in which a portion of the mark image M5 is covered and concealed by the user P is captured, discriminate the operation information also based on color of each projecting portion of the partially cutoff mark image in addition to the shape of the partially cutoff mark image and hence, the possibility that the operation information desired by the user P is erroneously recognized can be reduced as much as possible.

Fig. 9(C) shows a mark image M6 according to the third modification (hereinafter simply referred to as "mark image M6"). As shown in Fig. 9(C), the mark image M6 is constituted of a seal having the inside of a cruciform outer frame thereof colored fluorescent yellow.

By constituting the mark image M6 in this manner, the mark image M6 can be more easily captured by the CCD sensor 2.

Fig. 9(D) shows a mark image M7 according to the fourth modification (hereinafter simply referred to as "mark image M7"). As shown in Fig. 9(D), the mark image M7 is constituted of a seal having the inside of a black-colored cruciform outer frame thereof colored fluorescent yellow.

Particularly, by setting a line width of the outer frame of the mark image M7 larger than line widths of the outer frames of the mark images M4, M5, M6 of other modifications. Further, for emphasizing contrast of the mask image M7 at an outer peripheral portion of the mark image M7, black which is a thick color is selected as the color of the outer frame and fluorescent yellow which is a light color is selected as the color of the inside of the outer frame.

By constituting the mark image M7 in this manner, in capturing the mark image M7 using the CCD sensor 2, an edge of the mark image M7 can be emphasized and hence, the control part 110 of the HMD 1 can accurately discriminate a shape of the mark image M7 and a shape of the partially cutoff mark image.

Further, in constituting the mark image M7 in this manner, by making the light color of the inside of the outer frame different, the kind of the content to be displayed on the HMD 1 can be distinguished.

The above-described embodiment has been explained by taking the example in which the HMD 1 includes the control part 110 which functions as the content information selecting unit, the operation information selecting unit, the scanning processing unit and the like, the CCD sensor 2 which functions as the imaging unit which photographs the mark image, and the optical scanning part which constitutes the content display unit for displaying the content. However, the HMD 1 may be configured such that the content display unit is mounted on the head of the user P, and at least one of the control part 110 which functions as the content information selecting unit, the operation information selecting unit, the scanning processing unit and the like and the CCD sensor 2 which functions as the imaging unit which photographs the mark image may be formed as a part separate from the content display unit.

Due to such constitution, it is possible to provide the HMD which can reduce a weight and a size of the portion of the device to be mounted on the head of the user P thus effectively preventing the accumulation of fatigue to the user P even when he uses the HMD for a long time.

## Claims

1. A see-through-type head mount display which is configured to project an image light corresponding to content information to an eye of a viewer while allowing an external light to pass therethrough, the head mount display comprising:
an imaging unit which is configured to photograph at least a portion of a range of a viewing field of the viewer;
an operation information selecting unit which is configured, when a predetermined mark image which is displayed on a mark display body falls within an imaging region of the imaging unit, a portion of the mark image is covered by the viewer, and a configuration of the mark image from which the portion of the mark image is cut off is photographed by the imaging unit, to select operation information corresponding to the configuration of the photographed mark image; and
an operation processing unit which is configured to execute processing corresponding to the operation information selected by the operation information selecting unit.

2. A see-through-type head mount display according to claim 1, wherein the head mount display further comprises a content information selecting unit which is configured to, when the image photographed by the imaging unit contains the whole mark image, select content information corresponding to the mark image from plural kinds of content information, and
the operation information selecting unit is configured to, when the content information is selected by the content information selecting unit and, thereafter, the configuration of the mark image from which the portion of the mark image is cut off is photographed by the imaging unit, select operation information corresponding to the selected content information based on the configuration of the photographed mark image from which the portion of the mark image is cut off.

3. A see-through-type head mount display according to claim 2, wherein the content information selecting unit is configured to finish the selection of the content information when a predetermined period elapses from a point of time that the mark image is not contained in an image photographed by the imaging unit after the selection of the content information corresponding to the mark image.

4. A see-through-type head mount display according to any one of claims 1 to 3, wherein the head mount display further comprises a first memory unit which stores a first correspondence table in which the operation information is associated with a cutoff state of the mark image photographed by the imaging unit, and
the operation information selecting unit performs the selection of the operation information based on the first correspondence table stored in the first memory unit, wherein optionally the first memory unit stores the first correspondence table in which the operation information is associated with the configuration of the photographed mark image for every mark image corresponding to a kind of the content information.

5. A see-through-type head mount display according to claim 2 or 3, wherein the head mount display further comprises a second memory unit which stores a second correspondence table in which a kind of the content information is associated with configuration information of the whole mark image, and
the content information selecting unit is configured to perform the selection of the content information based on the second correspondence table stored in the second memory unit, wherein optionally the second memory unit stores, as the configuration information of the whole mask image in the second correspondence table, a table in which information of configuration where at least one of reflectance, color and pattern in at least a region of the mark image differs is associated with the corresponding kind of the content.

6. A see-through-type head mount display according to any one of claims 1 to 5, wherein the mark image has a cruciform.

7. A see-through-type head mount display according to any one of claims 1 to 6, wherein the mark image is configured to emphasize contrast at an outer peripheral portion thereof.

8. A see-through-type head mount display according to any one of claims 1 to 7, wherein the mark image is colored fluorescent color.

9. A see-through-type head mount display according to any one of claims 1 to 8, wherein the mark image is provided with a pattern for discriminating a kind of the mark image in a region thereof, wherein the pattern may be a two-dimensional bar code.

10. A see-through-type head mount display according to claim 9, wherein the pattern is arranged at a center position of the mark image.

11. A see-through-type head mount display according to any one of claims 1 to 10, wherein the head mount display is configured to project an image light which performs a guide display of a region to be photographed by the imaging unit to the eye of the viewer.

12. A see-through-type head mount display according to any one of claims 1 to 11, wherein the head mount display is configured to project an image light of the partially cutoff configuration of the mark image corresponding to the operation information selected by the operation information selecting unit to the eye of the viewer.

13. A see-through-type head mount display according to any one of claims 1 to 12, wherein the operation information selecting unit is configured to select the operation information corresponding to the configuration of the mark image when a state where the mark image is photographed by the imaging unit in a state where the portion of the mark image is cut off continues.

14. A see-through-type head mount display according to any one of claims 1 to 13, wherein the head mount display further comprises an illumination unit which illuminates a region photographed by the imaging unit.

15. A head mount display system comprising:
i) a see-through-type head mount display according to any preceding claim; and
ii) a mark display body on which the predetermined mark image is displayed.
